# EUROPEAN PATENT SPECIFICATION

(11) **EP 2 283 085 B1**
(45) Date of publication and mention of the grant of the patent: **13.02.2013**
(21) Application number: 08874534.4
(22) Date of filing: 02.12.2008
(51) Int. Cl.: C09D 5/00, C09D 7/00, C09D 133/04, C09D 5/02

(54) **WATER- BASED COATING COMPOSITION CONTAINING DIALKYL CARBONATES HAVING ETHER FUNCTIONS AS COALESCENT AGENTS AND USE THEROF**
WASSERBASIERENDE BESCHICHTUNGSZUSAMMENSETZUNG MIT DIALKYLCARBONATEN MIT ETHERFUNKTIONEN ALS KOALESZIERMITTEL UND VERWENDUNG DAVON
COMPOSITION DE REVÊTEMENT À BASE AQUEUSE CONTENANT DES CARBONATES DE DIALKYLE PRÉSENTANT DES FONCTIONS ÉTHER EN TANT QU AGENTS DE COALESCENCE ET SON UTILISATION

(30) Priority: 03.06.2008 IT MI20081010
(43) Date of publication of application: 16.02.2011
(73) Proprietor: Lechler S.P.A., 22100 Como (IT); Consorzio Nazionale Interuniversitario Chimica Per L'Ambiente, 30175 Marghera (Venezia) (IT)
(72) Inventor: RIVA, Livio, I-22073 Fino Mornasco (Como) (IT); MANGANO, Raffaele, I-22100 Como (IT); TUNDO, Pietro, R., I-30174 Mestre (IT)
(74) Representative: Bottero, Carlo
(86) International application number: PCT/IB2008/003409
(87) International publication number: WO 2009/147469

(56) References cited:
- WO-A-2006/127335
- JP-A- 9 165 586
- US-A- 5 186 744

## Description

The present invention relates to a water-based coating composition containing dialkyl carbonates having ether functions as coalescent agents and the use of dialkyl carbonate compounds having ether functions as coalescent agents.

The present invention can be inserted in the technical field of water-based coating compositions, in particular coating compositions containing coalescent agents (also called co-solvents).

The regulations in force on a national and international scale relating to the health of human beings and environment protection impose increasing restrictions in the use of organic solvents in coating compositions, such as, for example, painting products, inks and protective products in general. Over the years, this tendency has led to the use of water-based coating products in which the traditional organic solvent has been substituted by water.

Water-based coating compositions consist of (i) a polymeric-type resin dispersed in water or in the form of an aqueous emulsion or colloidal solution, (ii) one or more coalescent agents, (iii) possible pigments and fillers (iv) and possible additives (for example: catalysts, surface-active agents, viscosity regulators, biocides, etc.). The compositions are applied on a substrate to be coated by distributing them on its surface so as to form a continuous and adherent film of the protective, decorative type or with other functions.

When applied to a substrate and left to dry, the coating compositions must be capable of forming, already at relatively low temperatures (room temperature or lower), continuous films characterized by a high resistance and adherence to the surface of the substrate. The main function of coalescent agents in these compositions is to increase the plastic properties of the resin (through a reduction in the interactions between the polymeric chains) and promote the coalescence of its molecules until a continuous film is formed on the surface to be coated (filming).

With respect to the physico-chemical properties, the presence of a coalescent agent causes a lowering in the minimum filming temperature (TMF or MFFT (minimum film forming temperature)) of the coating composition, i.e. the minimum temperature at which it is possible to apply the composition on the surface of a substrate and obtain a continuous and regular coating film. The TMF depends on the nature of the composition and mainly on the type of resin used.

In the absence of coalescent agents, once the coating film has been dried, it may not form a continuous and uniform film (in the absence of pigments, a continuous, transparent and uniform film), and consequently, as it does not adhere perfectly to the support, become detached from its surface. The decorative, protective or functional effects may therefore be jeopardized.

The water-based coating compositions commercially available can contain up to 15% or more by weight of coalescent agents. The most widely-used coalescent compounds belong to the group of glycols, glycol-ethers or relative esters, pyrrolidones, alcohols and other groups. Examples of these compounds are glycol ethers deriving from ethylene or propylene oxides (ethyleneglycol mono-n-butyl ether is very commonly used).

The use of these compounds as coalescent agents, in particular in water-based painting products, has various disadvantages linked, in certain cases, to the toxicological profile for both human beings and also for the environment, in other cases, to the organoleptic characteristics (odour), in other cases again, to the low coalescent efficiency and low vapour pressures (with a prolonged sensitivity to water of the coating products obtained).

WO 2006 127 335 discloses waterborne coating composition that includes a synthetic resin and one or more carbonate ester as coalescing agent.

The necessity of finding new coalescent agents and new coating compositions comprising these agents which overcome the above drawbacks of the known art, is consequently strongly felt.

A first object of the present invention relates to a water-based coating composition comprising (a) at least one resin, (b) at least one coalescent agent consisting of a compound having general formula (I)

R₁ (OR₂)ₙOCOO (R₃O)ₘR₄ (I)

wherein
R₁ and R₄, independently of each other, are a linear or branched alkyl group, having from 1 to 6 carbon atoms, preferably from 1 to 4;
R₂ is a linear or branched alkylene group, having from 2 to 6 carbon atoms, preferably from 2 to 4;
R₃ is a linear or branched alkylene group, having from 2 to 6 carbon atoms, preferably from 2 to 3;
n is an integer varying from 1 to 4, preferably from 1 to 2;
m is an integer varying from 0 to 4, preferably from 0 to 2;
(c) water;
(d) optionally, pigments and/or fillers and/or additives.

A second object of the present invention relates to the use of the above compounds having general formula (I) as coalescent agents in coating compositions.

Further objects of the present invention are a method for the preparation of said compositions and a method for the coating of a substrate with said compositions.

The coating compositions, object of the present invention, comprise at least one polymeric-type resin selected from those commonly used in the formulation of water-based coating compositions. Examples of resins which can be used for the purposes of the present invention are the following: acrylic resins, self-crosslinking acrylic, styrene-acrylic, self-crosslinking styrene-acrylic, vinyl, vinyl-acrylic, polyolefin, modified polyolefin resins, acetal copolymers, polyurethane elastomers (PUD), modified polyurethane elastomers (PUD) (for example with fatty acids, with epoxy resins, etc.), self-crosslinking polyurethane elastomers (PUD), acrylic-elastomeric copolymers, epoxy resins, silicon resins, phenoxy resins, polyester resins, oil-modified alkyd resins, epoxy-melamine systems, epoxy-ureic systems, blocked epoxy-isocyanic systems, acrylic-melamine systems, acrylic-ureic systems, blocked acrylic-isocyanic systems, polyester-melamine systems, polyester-ureic systems, blocked polyester-isocyanic systems, esterified cellulose systems; the bicomponent systems acrylic-isocyanic-based, polyester-isocyanic-based, epoxy-isocyanic-based, epoxy-amine-based epoxy-amine adduct-based, epoxy-amide adduct-based, epoxy-amide-amine-based, epoxy-amine-imidazoline-based, epoxy-amide-based, acrylic/acrylic-elastomeric-silane copolymer-based, acrylic/acrylic-elastomeric-carboimide copolymer-based, acrylic/acrylic-elastomeric-aziridine copolymer-based, acrylic-zinc oxide-based; acrylated oligomers (urethane, polyesters, polyethers, acrylic, epoxy, PUD). Acrylic and modified acrylic, vinyl and modified vinyl resins, polyolefin and modified polyolefin resins, polyurethane elastomers (PUD) and modified polyurethane elastomers (PUD), epoxy resins, phenoxy resins, polyester resins, oil-modified alkyd resins; the bicomponent systems acrylic-isocyanic-based, polyester-isocyanic-based, epoxy-isocyanic-based, systems based on epoxy resin crosslinked with hardeners containing functional amine or amide groups, acrylic/acrylic-elastomeric-copolymer based systems crosslinked with silanes, imides, aziridines, zinc oxide; acrylated oligomers (urethane, polyesters, polyethers, acrylic, epoxy, PUD), are preferably used.

The resins are used in the form of aqueous dispersion, aqueous emulsion or colloidal aqueous solution.

The quantity of resin in supply form (i.e., as commercially available) used ranges from 5% to 95% by weight with respect to the total weight of the final composition, preferably from 10% to 90%, even more preferably from 15% to 85%.

In order to guarantee a high formation quality of the coating films, the compositions comprise one or more coalescent agents selected from the dialkyl carbonates having general formula (I). In the dialkyl carbonates having general formula (I), the groups R₁ (OR₂)ₙ and (R₃O)ₘR₄ represent substituents containing at least two carbon atoms chemically bound through an ether bond. Preferred compounds for their use as coalescent agents in the coating compositions are those having general formula (I) with n = 1 or 2, i.e. with 1 or 2 ether groups. The presence of the ether groups increases the polarity of the molecule with respect to the substituents consisting of alkane groups alone, thus improving the compatibility of the coalescent agent with water. Specific examples of compounds which represent the coalescent agents, object of the present invention, comprise: 2(2-methoxyethoxy)-ethyl methyl carbonate (hereafter also "A"), 2-methoxyethyl ethyl carbonate (hereafter also "B"), 3-methoxybutyl ethyl carbonate (hereafter also "C"), 2-methoxyethyl methyl carbonate, 1-methyl-2-propoxyethyl methyl carbonate, 2-butoxyethyl methyl carbonate, 3-methoxybutyl methyl carbonate, 2-methoxypropyl methyl carbonate, bis(2-methoxyethyl)carbonate, 2-propoxyethyl methyl carbonate, 2-isopropoxyethyl methyl carbonate; particularly preferred are the compounds 2(2-methoxyethoxy)-ethyl methyl carbonate (A), 2-methoxyethyl ethyl carbonate (B) and 3-methoxybutyl methyl carbonate (C) which have shown excellent results in terms of coalescent action.

The dialkyl carbonates, object of the invention, preferably have boiling points at atmospheric pressure ranging from 150°C to 300°C, more preferably from 170°C to 250°C.

The dialkyl carbonates can also be used as coalescent agents in a mixture with each other and/or in a mixture with coalescent agents of the conventional type.

The quantity of dialkyl carbonates to be used for having an effective coalescent action in the coating compositions depends on the type of resin used. Typically, the quantity of coalescent agent ranges from 1% to 30% by weight with respect to the total weight of the composition, preferably from 3% to 25%, even more preferably from 5% to 20%.

The coating compositions can also comprise pigments and fillers of the type commonly used in the preparation of coating compositions. Examples of pigments which can be used are the following:
- inorganic pigments such as: titanium dioxide, iron oxides, bismuth-vanadates, aluminosilicates, molybdenum sulfide, titanates; aluminums and coated aluminums, brasses, bronzes, (various types of flaked pigments based on metal or metal alloy with a zero oxidation number), natural micas coated with metallic oxides (such as, for example, titanium dioxide, iron oxides, chromium oxides, etc.), in addition to so-called coated "synthetic mica pigments" (such as for example, pigments based on alumina, silica, aluminum, liquid crystals, etc., coated or not with metallic oxides), phosphates, ortho-phosphates, phosphate hydrates of zinc, aluminum, molybdenum, calcium, phosphosilicates, phospho-silicate hydrates of zinc, calcium, strontium, aluminum, zinc phosphoborates, barium phospho-silicates, calcium borosilicates; calcium-silica-based pigments.

- organometallic pigments such as phthalocyanines, mental lacquers (manganese, etc.), metal-complexes (azoic compounds);
- organic pigments such as the following compounds: azoic (mono-azoic, mono-azoic-arylide, mono-azoic-benzimidazolone, mono-azoic-naphthol, diazoic-pyrazolone, azo-condensations), isoindoline (tetra chloride), quinophthalone, quinacridone, anthraquinone, pyrazolquinazolone, perinonic, perilenic, indanthrone, diketopyrrolpyrrolic, carbazole-dioxazine;
- carbon black.

Examples of fillers which can be used are the following compounds: silicons, barium sulfates, calcium carbonates, aluminum silicates, of magnesium, calcium, sulfides.

The coating compositions according to the present invention can also contain further additives of the type commonly used in the preparation of coating compositions such as, for example: salifying agents, catalysts, surface-active agents, stabilizers, adhesion promoters, corrosion inhibitors, biocides, viscosity-regulators, filters and light stabilizers, initiators, photo-initiators, activators and photo-activators.

The quantity of water in the composition corresponds to the complement to 100% by weight with respect to the sum of the weight percentages of the other components (resins, co-solvents, pigments, fillers, additives).

A second object of the present invention relates to the use of the dialkyl carbonates having general formula (I) defined above, as coalescent agents in coating compositions.

For the preparation of the dialkyl carbonates having general formula (I), it is possible to use synthesis methods well-known to experts in the field. A well-known method for obtaining asymmetrical organic carbonates is the reaction of alkyl chloroformiates with alcohols in the presence of base reagents (Edmund P. Woo and Frank C.W. Cheng, J. Org. Chem. 1986, 51, 3704-3706). Another method is the reaction of electrochemically activated CO₂ with alcohols and alkyl iodides (Tetrahedron Letters, Vol. 38, Nr. 20, pages 3565-3568, 1997).

It is also possible to obtain the above dialkyl carbonates through transesterification reactions of dimethyl carbonate with alcohols-ethers in the presence of suitable transesterification catalysts (for example, weak bases).

A further object of the present invention relates to a method for the preparation of a water-based coating composition comprising the mixing and/or dispersion of:
a) one or more resins;
b) one or more coalescent agents consisting of compounds having general formula (I)

   R₁ (OR₂)ₙOCOO(R₃O)ₘR₄ (I)

   wherein
   R₁ and R₄, independently of each other, are a linear or branched alkyl group, having from 1 to 6 carbon atoms, preferably from 1 to 4;
   R₂ is a linear or branched alkylene group, having from 2 to 6 carbon atoms, preferably from 2 to 4;
   R₃ is a linear or branched alkylene group, having from 2 to 6 carbon atoms, preferably from 2 to 3;
   n is an integer varying from 1 to 4, preferably from 1 to 2;
   m is an integer varying from 0 to 4, preferably from 0 to 2;
(c) water;
(d) optionally, pigments and/or fillers and/or additives; and the subsequent filtration of the mixture or dispersion obtained.

The coating composition can be prepared by the mixing or dispersion of the various components in a mixing/dispersion container, using the equipment and devices commonly used in the field (stirrers, homogenizers, dispersers, pumps, etc.).

"Mixing" refers to the mixing, at a moderate energy, of the components of the composition until a homogeneous preparation is obtained.

"Dispersion" refers to the mixing, at a high energy (with a disaggregating, disagglomerating capacity of solid components) of the components of the composition until a homogeneous preparation is obtained.

The mixing or dispersion phase is carried out at room temperature or at temperatures close to room temperature (from 15 to 50°C), and is prolonged until the desired homogenization degree of the composition.

The components of the composition can be added to the mixing/dispersion container under mechanical stirring following a suitable introduction order.

In some cases, in order to increase the dispersion level of the pigments and fillers present in the coating composition, after the dispersion phase and before the filtration, it is possible to subject the dispersion to a refining process effected with refining machines (mills).

After the mixing/dispersion and possible refining, the composition is brought to the correct type, according to defined technical specifications, i.e. if necessary, it is corrected by adding further quantities of one or more components until the desired properties for the coating composition are obtained. Finally, the coating composition is subjected to filtration.

A further object of the present invention relates to a method for coating a substrate comprising the following operative phases:
i) preparation of a water-based coating composition comprising at least one coalescent agent having general formula (I)

   R₁ (OR₂)ₙOCOO(R₃O)ₘR₄ (I)

   wherein
   - R₁ and R₄, independently of each other, are a linear or branched alkyl group, having from 1 to 6 carbon atoms, preferably from 1 to 4;
   - R₂ is a linear or branched alkylene group, having from 2 to 6 carbon atoms, preferably from 2 to 4;
   - R₃ is a linear or branched alkylene group, having from 2 to 6 carbon atoms, preferably from 2 to 3;
   - n is an integer varying from 1 to 4, preferably from 1 to 2;
   - m is an integer varying from 0 to 4, preferably from 0 to 2;
ii) application of the coating composition on the surface of a substrate;
iii) drying of the coating composition applied on the substrate.

The drying can be effected under environmental conditions, at a high temperature by convection and/or by electromagnetic radiation of the IR, microwave or UV type.

The coating composition according to the present invention can be applied to a substrate with the methods known in the state of the art, such as, for example, brush, roll, spray with aerographs of the pneumatic type, air-mix, airless, spray with electrostatic aerographs of the pneumatic type, air-mix, airless, spray with electrostatic rotating cups and disks, immersion, flow coating, veiling, deposition with rolls, electrophoresis.

The application to the surface to be coated is followed by a drying phase, in which the water and coalescent agent are evaporated from the composition applied with the formation of the coating film. As is known to experts in the field, this phase can be effected by allowing the surface on which the composition has been applied to dry naturally, i.e. under environmental conditions, or by drying the coating film by convection heating to an adequate temperature, or by electromagnetic radiation (IR, microwaves, UV) or through a combination of the above drying techniques.

The substrates that can be coated with the compositions of the present invention comprise, for example, thermoplastic, thermosetting, elastomeric plastic materials of all kinds (including copolymers, terpolymers, alloys and composites), metallic supports (for example, steels, zincated steels, stainless steels, aluminum and its alloys, anodized aluminum, zinc and its alloys, copper and its alloys, chromium, nickel, titanium and compounds thereof, etc.), all kinds of ligneous materials, mineral supports (for example, plasters, mortars, glass, ceramics, etc.), in addition to supports coated with other coating products (such as paints, inks, ceramics, galvanic depositions, PVD, etc.).

The dialkyl carbonates object, of the present invention, have coalescent properties comparable with or higher than those of known compounds in the state of the art, such as for example, ethylene glycol mono-n-butylether (C₄H₉-O-CH₂CH₂-OH), also called "butyl glycol". In particular, they are excellent coalescent agents for the preparation of water-based coating compositions. Their capacity of acting as coalescent agents is demonstrated by the lowering of the minimum filming temperature which is observed in coating compositions to which they are added in partial or complete substitution of conventional agents.

For a certain coating composition, with the same filming quality, the dialkyl carbonates can be used in a much lower quantity with respect to known coalescent agents in the state of the art. It is possible, for example, to prepare coating compositions containing dialkyl carbonates in a quantity more than 30% by weight lower with respect to analogous compositions containing ethylene glycol mono-n-butyl ether, with evident advantages in terms of protection for the operators, environmental protection and from an economical point of view.

The dialkyl carbonates of the present invention also have a much less dangerous toxicological profile than ethylene glycol mono-n-butyl ether and analogous coalescent compounds commonly used in the field. Their olfactory impact is also considerably reduced, as a result of the nature of the compound and also due to the lower quantities which are necessary in the preparation of the coating compositions.

The toxicological tests carried out on the co-solvent 2(2-methoxy-ethoxy)-ethyl methyl carbonate (co-solvent A), for example, produced surprisingly positive results as indicated hereunder:
1. Acute dermal toxicity (determined according to the "Guidelines for Testing of Chemicals" n° 402, February 24^{th} 1987 of "Organization for Economic Co-operation and Development" (OECD)): non-toxic, not dangerous.
2. Acute oral toxicity (OECD "Guidelines for Testing of Chemicals" n° 420, December 17th 2001): category 5/NC of the GHS classification (no symptom).
3. Ocular irritation (OECD "Guidelines for Testing of Chemicals" n° 405, February 24th 1987): irritating.
4. Skin irritation (OECD "Guidelines for Testing of Chemicals" n° 404, April 24th 2002) : nonirritating.
5. Skin sensitivity (OECD "Guidelines for Testing of Chemicals" n° 406, July 17th 1992 and UNI EN ISO 19993-10:2004): non-sensitizing.

The toxicological profile of the co-solvents of the present invention is therefore such as to enable these chemical products to be classified as non-dangerous.

The following embodiment and comparative examples are provided for purely illustrative purposes of the present invention and should in no way be considered as limiting the protection scope defined by the enclosed claims.

### Example 1: synthesis of 2(2-methoxy-ethoxy)-ethyl methyl carbonate (co-solvent A)

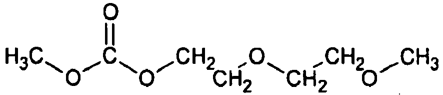

### 2(2-methoxy-ethoxy)-ethyl methyl carbonate (A)

1340 g of dimethyl carbonate (14.9 moles), 600 g of diethylene glycol mono-methyl ether (5 moles) and 60 g of potassium carbonate (0.43 moles) were added to and mixed in a 3-litre tree-necked flask equipped with a mechanical stirrer, thermometer and condenser.

The mixture was heated to 90°C for 1 h, it was then cooled to room temperature and filtered to remove the potassium carbonate catalyst.

300 ml of ethyl ether were first added to the liquid part (filtrate), a double washing was then effected with 300 ml of water for each washing in a separator funnel. After drying with anhydrous sodium sulfate, the organic phase was subjected to stripping in a rotating evaporator to eliminate the ethyl ether. The product obtained was distilled under vacuum at a pressure of 5 mm Hg and a temperature of 115°C. The product was subjected to GC analysis and its purity was calculated at 99.4 %p. Its molecular structure was confirmed by 1H and 13C NMR analysis. Its boiling point at atmospheric pressure was 235°C.

### Example 2: synthesis of 2-methoxyethyl ethyl carbonate (co-solvent B)

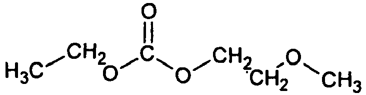

### 2-methoxyethyl ethyl carbonate (B)

354 g of diethyl carbonate (3 moles), 76.1 g of ethylene glycol mono-methyl ether (1 mole) and 12 g of Hydrotalcite KW2000 were added to and mixed in a 1-litre tree-necked flask equipped with a mechanical stirrer, thermometer and condenser.

The mixture was heated to 100°C for 1.5 h, it was then cooled to room temperature and filtered.

100 ml of ethyl ether were first added to the liquid part (filtrate), a double washing was then effected with a total of 150 ml of water in a separator funnel. After drying with anhydrous sodium sulfate, the organic phase was subjected to stripping in a rotating evaporator to eliminate the ethyl ether. The product obtained was distilled under vacuum at a pressure of 10 mm Hg and a temperature of 68°C. The product was subjected to GC analysis and its purity was calculated at 99.5 %p. Its molecular structure was confirmed by 1H and 13C NMR analysis. Its boiling point at atmospheric pressure was 188°C.

### Example 3: synthesis of 3-methoxybutyl methyl carbonate (co-solvent C)

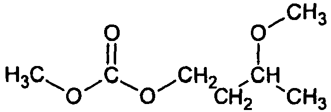

### 3-methoxybutyl methyl carbonate (C)

270 g of dimethyl carbonate (3 moles), 104.1 g of 3-methoxy-1 butanol (1 mole) and 13 g of cesium carbonate (0.04 moles) were added to and mixed in a 1-litre tree-necked flask equipped with a mechanical stirrer, thermometer and condenser.

The mixture was heated to 90°C for 1.5 h, it was then cooled to room temperature and filtered.

100 ml of ethyl ether were first added to the liquid part (filtrate), a double washing was then effected with a total of 150 ml of water in a separator funnel. After drying with anhydrous sodium sulfate, the organic phase was subjected to stripping in a rotating evaporator to eliminate the ethyl ether. The product obtained was distilled under vacuum at a pressure of 10 mm Hg and a temperature of 75°C.

The product was subjected to GC analysis and its purity was calculated at 99.3 %p. Its molecular structure was confirmed by 1H and 13C NMR analysis. Its boiling point at atmospheric pressure was 196°C.

### Example 4 (comparative)

In order to evaluate the coalescent efficiency of the co-solvents according to the present invention,' coalescence tests were carried out on resins in emulsion-dispersion and coating compositions containing the co-solvents A, B and C (Examples 1-3). The coalescent efficiency of each co-solvent was evaluated by estimating the quantity of co-solvent which it is necessary to add to a reference sample (resin in emulsion or coating composition) to give a TMF equal to 20°C. The quantity of co-solvent to be added was determined by mathematical interpolation of the TMF values measured for the resin in emulsion or the coating composition containing different quantities of co-solvent.

The coalescence effect of the co-solvents was tested on a sample (Ref. 1) consisting of a water emulsion of a styrene-acrylic resin (Neocryl A-662), having a dry residue equal to 41% by weight and a TMF in the absence of co-solvents equal to 90°C.

The coalescent effect of the following co-solvents belonging to the state of the art was tested in combination with Ref. 1: ethylene glycol mono-n-butyl ether, called butyl glycol (BuGly), dioctyl carbonate (DOC), di-2-ethyl-hexyl carbonate (DEEC).

The use of the co-solvents DOC and DEEC proved to be extremely difficult and did not give significant results due to the immediate and complete immiscibility of these two co-solvents in the emulsion Ref. 1.

The coalescent effect of the following co-solvents object of the present invention was tested in combination with Ref. 1: 2(2-methoxyethoxy)-ethyl methyl carbonate (co-solvent A), 2-methoxyethyl ethyl carbonate (co-solvent B) and 3-methoxybutyl methyl carbonate (co-solvent C).

An instrument MFFT-90 Bar, Rhopoint instruments Ltd., was used for the TMF measurement.

The TMF measurements were effected according to the following operative procedure: the co-solvent to be tested is added dropwise to 100 g of reference sample, maintained under mechanical stirring, until the following aliquots of co-solvent in the reference sample are reached : +5%, +10%, +15%, +20% and +25% by weight with respect to the weight of the reference sample. The reference sample containing the co-solvent in each of the above aliquots is distributed on the surface of the measurement instrument, operating within a suitable temperature range, by means of a film-layer applicator cube at 75 µm (wet thickness of the film applied).

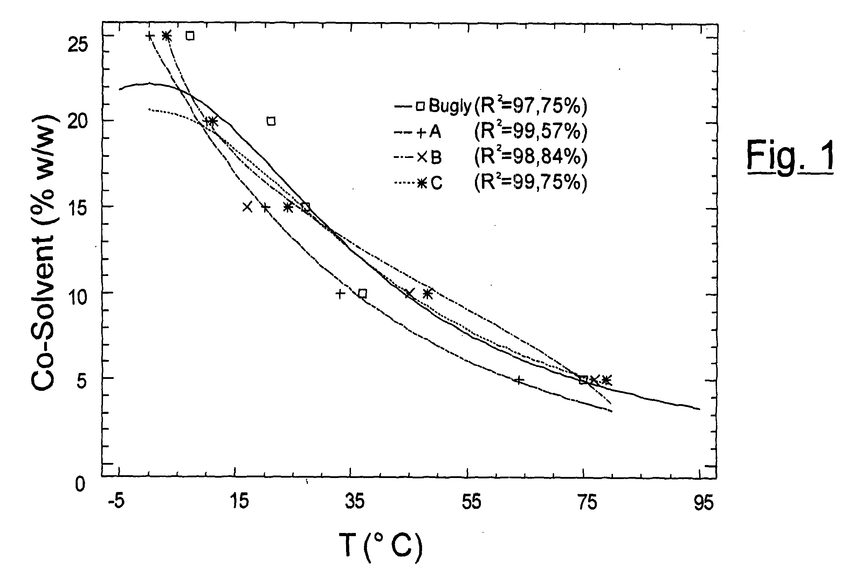

Table 1 indicates the TMF values measured for Ref. 1 containing different aliquots of each co-solvent. The same data are shown in graph form in Figure 1 enclosed.

**Table 1 - TMF values measured for Ref. 1 in combination with different co-solvents.**

| Co-solvent | Aliquot +5% | Aliquot +10% | Aliquot +15% | Aliquot +20% | Aliquot +25% |
|---|---|---|---|---|---|
| BuGly | 75°C | 37°C | 27°C | 21°C | 7°C |
| A | 63°C | 32°C | 19°C | 9°C | -1°C |
| B* | 77°C | 45°C | 17°C | 11°C | 3°C |
| C* | 79°C | 48°C | 24°C | 11°C | 3°C |

| | | | | | |
|---|---|---|---|---|---|
| * The coalescent agents B and C were added to Ref. 1, after mixing Ref. 1 with water in a ratio of 2:1, in order to avoid significant coagulation-precipitation phenomena of the resin. | | | | | |

By means of a fitting process (Software Statgraphics Centurion XV (Statpoint) of the experimental values of TMF observed for the different concentrations of co-solvent in Ref. 1, the quantity (weight percentage) of each co-solvent which must be added to Ref. 1 to obtain a TMF equal to 20°C (i.e. a representative value of the coalescence efficiency at room temperature) was obtained by mathematical interpolation.

The percentage values determined for the different co-solvents through interpolation of the experimental data are indicated in Table 2.

**Table 2 - Quantity of co-solvent to add to Ref.1 to obtain a TMF = 20°C**

| | BuGly | A | B | C |
|---|---|---|---|---|
| Interpolation % value | 17.75 | 14.58 | 17.00 | 16.51 |
| Confidence range limits 95.00% | Lower=13.32 | Lower=13.59 | Lower=13.95 | Lower=15.89 |
| | Upper=26.59 | Upper=15.64 | Upper=21.96 | Upper=17.11 |
| Difference with respect to BuGly (%) | ------ | -18 | -4 | -7 |

The experimental data show that by using the co-solvents A, B and C of the present invention instead of butyl glycol (BuGly) in combination with Ref.1, it is possible to obtain a TMF of 20°C, using lower quantities of co-solvent with respect to that of butyl glycol (A = -18%, B = -4%, C = -7%). The coalescent efficiency of the co-solvents according to the invention is there higher than that of butyl glycol.

### Example 5 (comparative)

The coalescent effect of the co-solvents A, B and C (Examples 1-3) was tested on a second reference sample (Ref. 2) consisting of a coating composition (transparent finishing) comprising a styrene-acrylic emulsion Neocryl A-662. The sample Ref. 2, produced according to the present invention, has the following composition (weight percentages with respect to the overall weight of the composition):

| | |
|---|---|
| Viscosity regulator solution | 25% |
| Antiscratch additive | 1% |
| Propylene glycol | 2% |
| Deionized water | 20% |
| Styrene-acrylic emulsion | 52% |

The TMF measurements were effected according to the same operating procedures as Example 4. The reference sample containing different aliquots of co-solvent was distributed on the surface of the measurement instrument, by means of a film-layer applicator cube at 75 µm (wet thickness of the film applied).

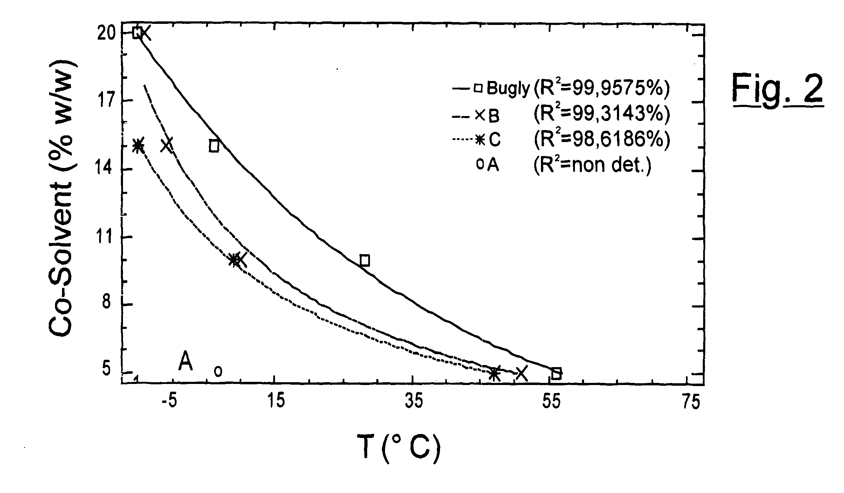

Table 3 indicates the TMF values measured for Ref. 2 containing different aliquots of each co-solvent. The same data are shown in graph form in Figure 2 enclosed.

Also in the case of the sample Ref. 2, the use of the co-solvents DOC and DEEC proved to be extremely difficult and did not give significant results due to the immediate and complete immiscibility of the two co-solvents in the composition.

**Table 3 - TMF values measured for Ref. 2 in combination with different co-solvents.**

| Co-solvent | Aliquot +5% | Aliquot +10% | Aliquot +15% | Aliquot +20% | Aliquot +25% |
|---|---|---|---|---|---|
| BuGly | 56°C | 28°C | 6°C | <-50°C* | < - 5°C* |
| A | 6°C | < - 5°C* | < - 5°C_{.} | < - 5°C* | < - 5°C |
| B* | 51°C | 10°C | -1°C | - 4°C | < - 5°C* |
| C* | 47°C | 9°C | - 5°C | < - 5°C* | < - 5°C* |

| | | | | | |
|---|---|---|---|---|---|
| * Instrumental limit value. | | | | | |

By means of a fitting process (Software Statgraphics Centurion XV (Statpoint) of the experimental values of TMF observed for the different concentrations of co-solvent in Ref. 2, the quantity (weight percentage) of each co-solvent which must be added to Ref. 2 to obtain a TMF equal to 20°C, was obtained by mathematical interpolation.

The percentage values determined for the different co-solvents through interpolation of the experimental data are indicated in Table 4.

**Table 4 - Quantity of co-solvent to add to Ref.2 to obtain a TMF = 20°C**

| | BuGly | A | B | C |
|---|---|---|---|---|
| Interpolation % value | 11.38 | <5 | 8.33 | 7.69 |
| Confidence range limits 95.00% | Lower=10.32 | Lower= -- | Lower=7.40 | Lower=6.90 |
| | Upper=12.55 | Upper= -- | Upper=9.54 | Upper=8.70 |
| Difference with respect to BuGly (%) | ------- | - 50 | - 27 | - 32 |

The experimental data show that by using the co-solvents A, B and C of the present invention instead of butyl glycol (BuGly) in combination with Ref.2, it is possible to obtain a TMF of 20°C, using lower quantities of co-solvent with respect to that of butyl glycol (BuGly) (B = -27%, C = -32%). For the co-solvent A a coalescent efficiency at least 50% higher can be estimated with respect to that of butyl glycol (BuGly).

### Example 6 (comparative):

The coalescent efficiency of the co-solvents A, B and C was compared with that of butyl glycol (BuGly) in the case of use as co-solvents in other reference samples consisting of coating compositions comprising different types of resins in emulsion. The coalescence tests were effected following the same procedures as those of Examples 4 and 5.

The co-solvents were tested in combination with coating compositions comprising the following resins in emulsion:
Neocryl A633 (styrene-acrylic emulsion, dry Residue 42%, TMF 54°C) ;
Pliotec LS1 (carboxylated styrene-acrylic emulsion, dry Residue 41%, TMF 57°C);
Alberdingk AS2515 (styrene-acrylic emulsion, dry Residue 50%, TMF 60°C);
Luhydran S937t (acrylic emulsion, dry Residue 45, MFFT >60°C);
Epirez 3540 WY 55 (high-molecular weight epoxy emulsion, dry Residue 55%, TMF 15°C);
Esacote PU51 (polyurethane dispersion, dry Residue 30%, TMF 10°C) ;
Esacote PU71 (polyurethane dispersion, dry Residue 35%, TMF 30°C) ;

The results of the coalescence tests confirmed the high coalescent efficiency of compounds A, B and C. The coalescent agents of the invention showed efficiency levels which were generally higher with respect to butyl glycol.

### Example 7:

The following coating compositions (Compositions 1-3) containing co-solvents based on dialkyl-carbonates having ether functions, were also prepared in accordance with the present invention.

Composition 1. coating composition for metallized finishing 1K for the Hi-Fi field containing (weight percentages with respect to the overall weight of the composition):

| | |
|---|---|
| Viscosity-regulation solution | 20.5% |
| Deionized water | 6.4% |
| Resin in Emulsion (Ref. 1) | 37.8% |
| Deionized water | 2.0% |
| Co-solvent A | 7.0% |
| Concentrated metallized base | 26.3% |

Composition 2. Epoxy-acrylic-polyurethane base 2K for the metal industry (weight percentages with respect to the overall weight of the composition):

| | |
|---|---|
| Epoxy emulsion | 14.3% |
| Acrylic emulsion | 7.9% |
| Slurry of fillers | 53.7% |
| Antiflash rust | 0.4% |
| Surface-active agent | 3.4% |
| Accelerating solution | 0.3% |
| Co-solvent A | 3.8% |
| Deionized water | 0.6% |
| Concentrated black base | 2.6% |
| Isocyanic hardener | 13.0% |

Composition 3. Neutral binder for metallized base 1k (weight percentages with respect to the overall weight of the composition):

| | |
|---|---|
| Polyurethane dispersion | 60.0% |
| Viscosity-regulation solution | 16.4% |
| Antifoam agent | 0.5% |
| Coalescent agent TEXANOL® | 2.2% |
| Co-solvent A | 7.7% |
| Surface-active agent | 4.0% |
| Deionized water | 12.8% |

In Composition 3, the coalescent agent was used in combination with a conventional agent belonging to the state of the art TEXANOL® (Eastman Chemical Company, 2,2,4 trimethyl 1,3 pentanediol mono-isobutyrate).

## Claims

1. A water-based coating composition comprising (a) at least one resin, (b) at least one coalescent agent consisting of a compound having general formula (I)
R₁ (OR₂)ₙOCOO(R₃O)ₘR₄ (I)
wherein
R₁ and R₄, independently of each other, are a linear or branched alkyl group, having from 1 to 6 carbon atoms, preferably from 1 to 4;
R₂ is a linear or branched alkylene group, having from 2 to 6 carbon atoms, preferably from 2 to 4;
R₃ is a linear or branched alkylene group, having from 2 to 6 carbon atoms, preferably from 2 to 3;
n is an integer varying from 1 to 4, preferably from 1 to 2;
m is an integer varying from 0 to 4, preferably from 0 to 2;
(c) water;
(d) optionally, pigments and/or fillers and/or additives.

2. The composition according to claim 1, wherein the coalescent agent is selected from 2(2-methoxyethoxy)-ethyl methyl carbonate (A), 2-methoxyethyl ethyl carbonate (B), 3-methoxybutyl ethyl carbonate (C), 2-methoxyethyl methyl carbonate, 1-methyl-2-propoxyethyl methyl carbonate, 2-butoxyethyl methyl carbonate, 3-methoxybutyl methyl carbonate, 2-methoxypropyl methyl carbonate, bis(2-methoxyethyl)carbonate, 2-propoxyethyl methyl carbonate, 2-isopropoxyethyl methyl carbonate; preferably from 2(2-methoxyethoxy)-ethyl methyl carbonate (A), 2-methoxyethyl ethyl carbonate (B) and 3-methoxybutyl methyl carbonate (C).

3. The composition according to any of the claims from 1 to 2, wherein the resin is present in a concentration varying from 5% to 95% by weight with respect to the total weight of the final composition, preferably from 10% to 90%, even more preferably from 15% to 85%.

4. The composition according to any of the claims from 1 to 3, wherein the coalescent agent is present in a concentration varying from 1% to 30% by weight with respect to the total weight of the composition, preferably from 3% to 25%, - even more preferably from 5% to 20%.

5. The composition according to any of the claims from 1 to 4, also comprising one or more coalescent agents of the conventional type.

6. The composition according to any of the claims from 1 to 5, wherein the water is present in a quantity equal to the complement to 100% by weight with respect to the sum of the weight percentages of the other components (resins, co-solvents, pigments, fillers, additives).

7. The composition according to any of the claims from 1 to 6, wherein the coalescent agent has a boiling point at atmospheric pressure ranging from 150°C to 300°C, more preferably from 170°C to 250°C.

8. The composition according to any of the claims from 1 to 7, wherein the resin is a resin selected from: acrylic resins, self-crosslinking acrylic, styrene-acrylic, self-crosslinking styrene-acrylic, vinyl, vinyl-acrylic, polyolefin, modified polyolefin resins, acetal copolymers, polyurethane elastomers (PUD), modified polyurethane elastomers (PUD) (for example with fatty acids, with epoxy resins, etc.), self-crosslinking polyurethane elastomers (PUD), acrylic-elastomeric copolymers, epoxy resins, silicon resins, phenoxy resins, polyester resins, oil-modified alkyd resins, epoxy-melamine systems, epoxy-ureic systems, blocked epoxy-isocyanic systems, acrylic-melamine systems, acrylic-ureic systems, bloomed acrylic-isoayanic systems, polyester-melamine systems, polyester-ureic systems, blocked polyester-isocyanic systems, esterified cellulose systems; the following bicomponent systems: acrylic-isocyanic-based, polyester-isocyanic-based, epoxy-isocyanic-based, epoxy-amine-based epoxy-amine adduct-based, epoxy-amide adduct-based, epoxy-amide-amine-based, epoxy-amine-imidazoline-based, epoxy-amide-based, acrylic/acrylic-elastomeric-silane copolymer-based, acrylic/acrylic-elastomeric-carboimide copolymer-based, acrylic/acrylic-elastomeric-aziridine copolymer-based, acrylic-zinc oxide-based; acrylated oligomers (urethane, polyesters, polyethers, acrylic, epoxy, PUD). Acrylic and modified acrylic, vinyl and modified vinyl resins, polyolefin and modified polyolefin resins, (polyurethane elastomers (PUD) and modified polyurethane elastomers (PUD), epoxy resins, phenoxy resins, polyester resins, oil-modified alkyd resins; the following bicomponent systems: acrylic-isocyanic-based, polyester-isocyanic-based, epoxy-isocyanic-based, systems based on epoxy resign crosslinked with hardeners containing functional amine or amide groups, acrylic/acrylic-elastomeric-copolymer-based crosslinked with silanes, imides, aziridines, zinc oxide; acrylated oligomers (urethane, polyesters, acrylic, epoxy, PUD) are preferably used.

9. The composition according to any of the claims from 1 to 8, wherein the resin is in the form of an aqueous dispersion or aqueous emulsion or colloidal aqueous emulsion.

10. The composition according to any of the claims from 1 to 9, also comprising one or more pigments selected from:
- inorganic pigments such as: titanium dioxide, iron oxides, bismuth-vanadates, aluminosilicates, molybdenum sulfide, titanates; aluminums and coated aluminums, brasses, bronzes, (various types of flaked pigments based on metal or metal alloy with a zero oxidation number), natural micas coated with metallic oxides, (such as, for example, titanium dioxide, iron oxides, chromium oxides, etc.), in addition to so-called coated "synthetic mica pigments" (such as for example, pigments based on alumina, silica, aluminum, liquid crystals, etc., coated or not with metallic oxides), phosphates, ortho-phosphates, phosphate hydrates of zinc, aluminum, molybdenum, calcium, phosphosilicates, phospho-silicate hydrates of zinc, calcium, strontium, aluminum, zinc phosphoborates, barium phospho-silicates, calcium borosilicates; calcium-silica-based pigments.
- organometallic pigments such as phthalocyanines, metal lacquers (manganese, etc.), metal-complexes (azoic compounds)
- organic pigments such as the following compounds: azoic (mono-azoic, mono-azoic-arylide, mono-azoic-benzimidazolone, mono-azoic-naphthol, diazoic-pyrazolone, azo-condensations), isoindoline (tetra chloride), quinophthalone, quinacridone, anthraquinone, pyrazolquinazolone, perinonic, perilenic, indanthrone, diketopyrrolpyrrolic, carbazole-dioxazine;
- carbon black.

11. The composition according to any of the claims from 1 to 10, also comprising one or more fillers selected from the following compounds: silicons, barium sulfates, calcium carbonates, aluminum silicates, of magnesium, calcium, sulfides.

12. The composition according to any of the claims from 1 to 11, also comprising one or more additives selected from the salifying compounds, catalysts, surface-active agents, stabilizers, adhesion promoters, corrosion inhibitors, biocides, viscosity-regulators, filters and light stabilizers, initiators, photo-initiators, activators and photo-activators.

13. Use of the compound having general formula (I)
R₁ (OR₂)ₙOCOO(R₃O)ₘR₄ (I)
wherein
R₁ and R₄, independently of each other, are a linear or branched alkyl group, having from 1 to 6 carbon atoms, preferably from 1 to 4;
R₂ is a linear or branched alkylene group, having from 2 to 6 carbon atoms, preferably from 2 to 4;
R₃ is a linear or branched alkylene group, having from 2 to 6 carbon atoms, preferably from 2 to 3;
n is an integer varying from 1 to 4, preferably from 1 to 2;
m is an integer varying from 0 to 4, preferably from 0 to 2;
as coalescent agent in coating compositions.

14. Use according to claim 13, wherein the compound having general formula (I) is selected from 2(2-methoxyethoxy)-ethyl methyl carbonate (A), 2-methoxyethyl ethyl carbonate (H), 3-methoxybutyl methyl carbonate, 3-methoxybutyl ethyl carbonate (C), 2-methoxyethyl methyl carbonate, 1-methyl-2-propoxyethyl methyl carbonate, 2-butoxyethyl methyl carbonate, 2-methoxypropyl methyl carbonate, bis(2-methoxyethyl)carbonate, 2-propoxyethyl methyl carbonate, 2-isopropoxyethyl methyl carbonate; preferably from 2(2-methoxyethoxy)-ethyl methyl carbonate (A), 2-methoxyethyl ethyl carbonate (B) and 3-methoxybutyl methyl carbonate (C).

15. A method for the preparation of a water-based coating composition comprising the mixing and/or dispersion of:
a) one or more resins;
b) one or more coalescent agents consisting of compounds having general formula (I)
R₁ (OR₂)ₙOCOO(R₃O)ₘR₄ (I)
wherein
R₂ and R₄, independently of each other, are a linear or branched alkyl group, having from 1 to 6 carbon atoms, preferably from 1 to 4;
R₂ is a linear or branched alkylene group, having from 2 to 6 carbon atoms, preferably from 2 to. 4;
R₃ is a linear or branched alkylene group, having from 2 to 6 carbon atoms, preferably from 2 to 3;
n is an integer varying from 1 to 4, preferably from 1 to 2;
m is an integer varying from 0 to 4, preferably from 0 to 2;
(c) water;
(d) optionally, pigments and/or fillers and/or additives; and the subsequent filtration of the mixture or dispersion obtained.

16. A method for the preparation of a coating composition according to claim 15, wherein the coalescent agent in a compound according to any of claims 13 or 14.

17. The method according to claim 15 or 16, also comprising a refining phase of the dispersion before filtration.

18. A method for coating a substrate comprising the following operative phases;
i) preparation of a water-based coating composition comprising at least one coalescent agent having general formula (I)
R₁ (OR₂)ₙOCOO(R₃O)ₘR₄ (I)
wherein
- R₁ and R₄, independently of each other, are a linear or branched alkyl group, having from 1 to 6 carbon atoms, preferably from 1 to 4;
- R₂ is a linear or branched alkylene group, having from 2 to 6 carbon atoms, preferably from 2 to 4;
- R₃ is a linear or branched alkylene group, having from 2 to 6 carbon atoms, preferably from 2 to 3;
- n is an integer varying from 1 to 4, preferably from 1 to 2;
- m is an integer varying from o to 4, preferably from 0 to 2;
ii) application of the coating composition on the surface of a substrate;
iii) drying of the coating composition applied on the substrate.

19. The method for coating a substrate according to claim 18, wherein the coating composition is a composition according to any of the claims from 1 to 12.

20. The method according to claim 18 or 19, wherein the application is effected with one of the following methods: brush, roll, spray with aerographs of the pneumatic type, air-mix, airless, spray with electrostatic aerographs of the pneumatic type, air-mix, airless, spray with electrostatic rotating cups and disks, immersion, flow coating, veiling, deposition with rolls, electrophoresis.

21. The method according to any of the claims from is to 20, wherein the drying is effected under environmental conditions and/or at a high temperature by convection and/or by electromagnetic radiation of the IR, microwave or UV type.

22. The method according to any of the claims from 18 to 21, wherein the substrate is selected from thermoplastic, thermosetting, elastomeric plastic materials of all kinds, metallic supports, all kinds of ligneous materials, mineral supports, in addition to supports coated with other coating products.

## Patentansprüche

1. Wasserbasierte Beschichtungszusammensetzung umfassend (a) mindestens ein Harz, (b) mindestens ein Koaleszenzmittel bestehend aus einer Verbindung mit der allgemeinen Formel (I)
R₁(OR₂)ₙOCOO(R₃O)ₘR₄ (I)
wobei
R₁ und R₄ unabhängig voneinander eine lineare oder eine verzweigte Alkylgruppe mit von 1 bis 6, bevorzugt von 1 bis 4, Kohlenstoffatomen sind;
R₂ eine lineare oder verzweigte Alkylengruppe mit von 2 bis 6, bevorzugt von 2 bis 4, Kohlenstoffatomen ist;
R₃ eine lineare oder verzweigte Alkylengruppe mit von 2 bis 6, bevorzugt von 2 bis 3, Kohlenstoffatomen ist;
n eine von 1 bis 4, bevorzugt von 1 bis 2, variierende ganze Zahl ist;
m eine von 0 bis 4, bevorzugt von 0 bis 2, variierende ganze Zahl ist;
(c) Wasser;
(d) gegebenenfalls Pigmente und/oder Füllstoffe und/oder Additive.

2. Zusammensetzung nach Anspruch 1, wobei das Koaleszenzmittel aus 2(2-Methoxyethoxy)-ethylmethylcarbonat (A), 2-Methoxyethylethylcarbonat (B), 3-Methoxybutylethylcarbonat (C), 2-Methoxyethylmethylcarbonat, 1-Methyl-2-propoxyethylmethylcarbonat, 2-Butoxyethylmethylcarbonat, 3-Methoxybutylmethylcarbonat, 2-Methoxypropylmethylcarbonat, Bis(2-methoxyethyl)carbonat, 2-Propoxyethylmethylcarbonat, 2-Isopropoxyethylmethylcarbonat; bevorzugt aus 2(2-Methoxyethoxy)-ethylmethylcarbonat (A), 2-Methoxyethylethylcarbonat (B) und 3-Methoxybutylmethylcarbonat (C) ausgewählt ist.

3. Zusammensetzung nach einem der Ansprüche 1 bis 2, wobei das Harz in einer von 5% bis 95 Gew.-%, bevorzugt von 10% bis 90%, stärker bevorzugt von 15% bis 85%, bezogen auf das gesamte Gewicht der Endzusammensetzung, variierenden Konzentration vorliegt.

4. Zusammensetzung nach einem der Ansprüche 1 bis 3, wobei das Koaleszenzmittel in einer von 1% bis 30 Gew.-%, bevorzugt von 3% bis 25%, stärker bevorzugt von 5% bis 20 %, bezogen auf das gesamte Gewicht der Zusammensetzung, variierenden Konzentration vorliegt.

5. Zusammensetzung nach einem der Ansprüche 1 bis 4, auch umfassend ein oder mehrere Koaleszenzmittel des konventionellen Typs.

6. Zusammensetzung nach einem der Ansprüche 1 bis 5, wobei das Wasser in einer Menge vorliegt, die der Ergänzung auf 100 Gew.-% bezogen auf die Summe der Gewichtsprozente der anderen Bestandteile entspricht (Harze, Co-Lösungsmittel, Pigmente, Füllstoffe, Additive).

7. Zusammensetzung nach einem der Ansprüche 1 bis 6, wobei das Koaleszenzmittel bei Atmosphärendruck einen Siedepunkt im Bereich von 150°C bis 300°C, stärker bevorzugt von 170°C bis 250°C, aufweist.

8. Zusammensetzung nach einem der Ansprüche 1 bis 7, wobei das Harz ein Harz ist ausgewählt aus: Acrylharzen, selbstvernetzenden Acryl-, Styrolacryl-, selbstvernetzende Styrolacryl-, Vinyl-, Vinylacryl-, Polyolefin-, modifizierten Polyolefinharzen, Acetalcopolymeren, Polyurethanelastomeren (PUD), modifizierten Polyurethanelastomeren (PUD) (zum Beispiel mit Fettsäuren, mit Expoxidharzen, usw.), selbstvernetzenden Polyurethanelastomeren (PUD), Acrylelastomer-Copolymeren, Epoxidharzen, Silikonharzen, Phenoxyharzen, Polyesterharzen, ölmodifizierten Alkydharzen, Epoxy-Melamin-Systemen, Epoxy-Harnstoff-Systemen, geblockten Epoxy-Isocyan-Systemen, Acryl-Melamin-Systemen, Acryl-Harnstoffsystemen, geblockten Acryl-Isocyan-Systemen, Polyester-Melamin-Systemen, Polyester-Harnstoff-Systemen, geblockten Polyester-Isocyan-Systemen, veresterten Cellulosesystemen, den folgenden Zwei-Komponenten-Systemen: Acryl-Isocyan basierten, Polyester-Isocyan basierten, Epoxy-Isocyan basierten, Epoxy-Amin basierten, Epoxy-Amin-Addukt basierten, Epoxy-Amid-Addukt basierten, Epoxy-Amid-Amin basierten, Epoxy-Amin-Imidazonlin basierten, Epoxy-Amid basierten, Acryl/Acrylelastormersilancopolymer basierten, Acryl/Acrylelastormercarboimidcopolymer basierten, Acryl/Acrylelastomeraziridincopolymer basierten, Acryl-Zinkoxid basierten, acrylierten Oligomeren (Urethane, Polyester, Polyether, Acryl, Epoxid, PUD). Acryl- und modifizierten Acryl-, Vinyl- und modifizierten Vinylharzen, Polyolefin - und modifizierten Polyolefinharzen, Polyurethanelastomeren (PUD) und modifizierten Polyurethanelastomeren (PUD), Epoxidharzen, Phenoxyharzen, Polyesterharzen, ölmodifizierten Alkydharzen, den folgenden Zwei-Komponenten-Systemen: Acryl-Isocyan basierten, Polyester-Isocyan basierten, Epoxy-Isocyan basierten, Systemen auf Basis von mit Härtern, die funktionelle Amin- oder Amidgruppen enthalten, vernetztem Epoxidharz, Acryl/Acrylelastomercopolymer basierten vernetzt mit Silan, Imiden, Aziridinen, Zinkoxid; acrylierte Oligomere (Urethane, Polyester, Acryl, Epoxy, PUD) sind bevorzugt verwendet.

9. Zusammensetzung nach einem der Ansprüche von 1 bis 8, wobei das Harz in der Form einer wässrigen Dispersion oder wässrigen Emulsion oder kolloidalen, wässrigen Emulsion vorliegt.

10. Zusammensetzung nach einem der Ansprüche von 1 bis 9, auch umfassend eins oder mehrere Pigmente ausgewählt aus:
- anorganischen Pigmenten wie: Titandioxid, Eisenoxide, Bismutvanadate, Aluminosilikate, Molybdänsulfid, Titanate, Aluminiumsorten und beschichtete Aluminiumsorten, Messingsorten, Bronzen (verschiedene Typen von Plättchenpigmenten basierend auf Metall oder Metalllegierung mit einer Oxidationszahl 0), natürlicher, mit metallischen Oxiden (wie zum Beispiel Titandioxid, Eisenoxiden, Chromoxiden, usw.) beschichteter Glimmer, zusätzlich zu sogenannten beschichteten "synthetischen Glimmerpigmenten" (wie zum Beispiel Pigmente basierend auf Aluminiumoxid, Silika, Aluminium, Flüssigkristallen usw., beschichtet oder nicht beschichtet mit Metalloxiden), Phosphate, ortho-Phosphate, Phosphathydrate von Zink, Aluminium, Molybdän, Calcium, Phosphosilikate, Phosphsilikathydrate von Zink, Calcium, Strontium, Aluminium, Zinkphosphoborate, Bariumphosphosilikate, Calciumborosilikate, Calciumsilika basierte Pigmente.
- Organometallpigmenten wie Phthalocyanine, Metalllacke (Mangan usw.), Metallkomplexe (Azoverbindungen);
- organischen Pigmenten wie die folgenden Verbindungen: Azo (Monoazo, Monoazoarylid, Monoazobenzimidazolon, Monoazonaphthol, Diazopyrazolon, Azo-Kondensationen), Isoindolin (Tetrachlorid), Chinophthalon, Chinacridon, Anthrachinon, Pyrazolquinazolon, perinonischen, perlienischen, Indanthron, diketopyrrolytischen, Carbazoldioxazin;
- Ruß.

11. Zusammensetzung nach einem der Ansprüche von 1 bis 10, auch umfassend einen oder mehrere Füllstoffe ausgewählt aus den folgenden Verbindungen: Silikonen, Bariumsulfaten, Calciumcarbonaten, Aluminiumsilikaten, von Magnesium, Calcium, Sulfiden.

12. Zusammensetzung nach einem der Ansprüche von 1 bis 11, auch umfassend ein oder mehrere Additive, ausgewählt aus den salzbildenden Verbindungen, Katalysatoren, oberflächenaktiven Mitteln, Stabilisatoren, Adhäsionspromotoren, Korrosionsinhibitoren, Bioziden, Viskositätsregulatoren, Filtern und Lichtstabilisatoren, Initiatoren, Photoinitiatoren, Aktivatoren und Photoaktivatoren.

13. Verwendung der Verbindung mit der allgemeinen Formel (I)
R₁(OR₂)ₙOCOO(R₃O)ₘR₄ (I)
wobei
R₁ und R₄ unabhängig voneinander eine lineare oder eine verzweigte Alkylgruppe mit von 1 bis 6, bevorzugt von 1 bis 4, Kohlenstoffatomen sind;
R₂ eine lineare oder verzweigte Alkylengruppe mit von 2 bis 6, bevorzugt von 2 bis 4, Kohlenstoffatomen ist;
R₃ eine lineare oder verzweigte Alkylengruppe mit von 2 bis 6, bevorzugt von 2 bis 3, Kohlenstoffatomen ist;
n eine von 1 bis 4, bevorzugt von 1 bis 2, variierende ganze Zahl ist;
m eine von 0 bis 4, bevorzugt von 0 bis 2, variierende ganze Zahl ist;
als Koaleszenzmittel in Beschichtungszusammensetzungen.

14. Verwendung nach Anspruch 13, wobei die Verbindung mit der allgemeinen Formel (I) aus 2(2-Methoxyethoxy)-ethylmethylcarbonat (A), 2-Methoxyethylethylcarbonat (B), 3-Methoxybutylmethylcarbonat, 3-Methoxybutylethylcarbonat (C), 2-Methoxyethylmethylcarbonat, 1-Methyl-2-propoxyethylmethylcarbonat, 2-Butoxyethylmethylcarbonat, 2-Methoxypropylmethylcarbonat, Bis(2-methoxyethyl)carbonat, 2-Propoxyethylmethylcarbonat, 2-Isopropoxyethylmethylcarbonat; bevorzugt aus 2(2-Methoxyethoxy)-ethylmethylcarbonat (A), 2-Methoxyethylethylcarbonat (B) und 3-Methoxybutylmethylcarbonat (C) ausgewählt ist.

15. Verfahren für die Herstellung einer Wasser-basierten Beschichtungszusammensetzung umfassend das Mischen und/oder eine Dispersion von:
a) einem oder mehreren Harzen;
b) einem oder mehreren Koaleszenzmitteln bestehend aus der Verbindung mit der allgemeinen Formel (I)
R₁(OR₂)ₙOCOO(R₃O)ₘR₄ (I)
wobei
R₁ und R₄ unabhängig voneinander eine lineare oder eine verzweigte Alkylgruppe mit von 1 bis 6, bevorzugt von 1 bis 4, Kohlenstoffatomen sind;
R₂ eine lineare oder verzweigte Alkylengruppe mit von 2 bis 6, bevorzugt von 2 bis 4, Kohlenstoffatomen ist;
R₃ eine lineare oder verzweigte Alkylengruppe mit von 2 bis 6, bevorzugt von 2 bis 3, Kohlenstoffatomen ist;
n eine von 1 bis 4, bevorzugt von 1 bis 2, variierende ganze Zahl ist;
m eine von 0 bis 4, bevorzugt von 0 bis 2, variierende ganze Zahl ist;
(c) Wasser;
(d) gegebenenfalls Pigmente und/oder Füllstoffe und/oder Additive;
und die anschließende Filtration der erhaltenen Mischung oder Dispersion.

16. Verfahren für die Herstellung einer Beschichtungszusammensetzung nach Anspruch 15, wobei das Koaleszenzmittel eine Verbindung nach einem der Ansprüche 13 oder 14 ist.

17. Verfahren nach Anspruch 15 oder 16, auch umfassend eine Raffinationsphase der Dispersion vor der Filtration.

18. Verfahren zum Beschichten eines Substrats umfassend die folgenden Betriebsphasen:
i) Herstellung einer Wasser-basierten Beschichtungszusammensetzung umfassend mindestens ein Koaleszenzmittel mit der folgenden allgemeinen Formel (I)
R₁(OR₂)ₙOCOO(R₃O)ₘR₄ (I)
wobei
R₁ und R₄ unabhängig voneinander eine lineare oder eine verzweigte Alkylgruppe mit von 1 bis 6, bevorzugt von 1 bis 4, Kohlenstoffatomen sind;
R₂ eine lineare oder verzweigte Alkylengruppe mit von 2 bis 6, bevorzugt von 2 bis 4, Kohlenstoffatomen ist;
R₃ eine lineare oder verzweigte Alkylengruppe mit von 2 bis 6, bevorzugt von 2 bis 3, Kohlenstoffatomen ist;
n eine von 1 bis 4, bevorzugt von 1 bis 2, variierende ganze Zahl ist;
m eine von 0 bis 4, bevorzugt von 0 bis 2, variierende ganze Zahl ist;
ii) Aufbringen der Beschichtungszusammensetzung auf der Oberfläche eines Substrats;
iii) Trocknen der auf der Oberfläche aufgebrachten Beschichtungszusammensetzung.

19. Verfahren zum Beschichten eines Substrats nach Anspruch 18, wobei die Beschichtungszusammensetzung eine Zusammensetzung nach einem der Ansprüche von 1 bis 12 ist.

20. Verfahren nach Anspruch 18 oder 19, wobei das Aufbringen mit einem der folgenden Verfahren bewirkt wird: Pinsel, Rolle, Spray mit Aerographen vom pneumatischen Typ, Airmix, Airless, Spray mit elektrostatischen Aerographen vom pneumatischen Typ, Airmix, Airless, Spray mit elektrostatischen, rotierenden Bechern und Scheiben, Tauchen, Flussbeschichten, Verschleiern, Abscheidung mit Rollen, Elektrophorese.

21. Verfahren nach einem der Ansprüche von 18 bis 20, wobei das Trocknen unter Umgebungsbedingungen und/oder bei einer hohen Temperatur durch Konvektion und/oder durch elektromagnetische Strahlung vom IR-, Mikrowellen- oder UV-Typ bewirkt wird.

22. Verfahren nach einem der Ansprüche von 18 bis 21, wobei das Substrat ausgewählt ist aus thermoplastischen, wärmehärtenden, elastomer-plastischen Materialen jeden Typs, metallischen Trägern, jeder Art von holzartigen Materialien, mineralischen Trägern, zusätzlich zu mit anderen Beschichtungsprodukten beschichteten Trägern.

## Revendications

1. Composition de revêtement à base aqueuse comprenant (a) au moins une résine, (b) au moins un agent de coalescence consistant en un composé ayant la formule générale (I)
R₁(OR₂)ₙOCOO(R₃O)ₘR₄ (I)
où
R₁ et R₄, indépendamment l'un de l'autre, sont un groupe alkyle linéaire ou ramifié, ayant 1 à 6 atomes de carbone, de préférence 1 à 4 ;
R₂ est un groupe alkylène linéaire ou ramifié, ayant 2 à 6 atomes de carbone, de préférence 2 à4;
R₃ est un groupe alkylène linéaire ou ramifié, ayant 2 à 6 atomes de carbone, de préférence 2 à3;
n est un nombre entier variant de 1 à 4, de préférence de 1 à 2 ;
m est un nombre entier variant de 0 à 4, de préférence de 0 à 2 ;
(c) de l'eau ;
(d) en option, des pigments et/ou des charges et/ou des additifs.

2. Composition selon la revendication 1, dans laquelle l'agent de coalescence est sélectionné parmi 2(2-méthoxyéthoxy)-carbonate de méthyle éthyle (A), carbonate d'éthyle 2-méthoxyéthyle (B), carbonate d'éthyle 3-méthoxybutyle (C), carbonate de méthyle 2-méthoxyéthyle, carbonate de méthyle 1-méthyle-2-propoxyéthyle, carbonate de méthyle 2-butoxyéthyle, carbonate de méthyle 3-méthoxybutyle, carbonate de méthyle 2-méthoxypropyle, carbonate bis(2-méthoxyéthyle), carbonate de méthyle 2-propoxyéthyle, carbonate de méthyle 2-isopropoxyéthyle ; de préférence parmi 2(2-méthoxyéthoxy)-carbonate de méthyle éthyle (A), carbonate d'éthyle 2-méthoxyéthyle (B) et carbonate de méthyle 3-méthoxybutyle (C).

3. Composition selon l'une quelconque des revendications 1 à 2, dans laquelle la résine est présente dans une concentration variant de 5% à 95% en poids par rapport au poids total de la composition finale, de préférence de 10% à 90%, de manière encore plus préférée de 15% à 85%.

4. Composition selon l'une quelconque des revendications 1 à 3, dans laquelle l'agent de coalescence est présent dans une concentration variant de 1% à 30% en poids par rapport au poids total de la composition, de préférence de 3% à 25%, de manière encore plus préférée de 5% à 20%.

5. Composition selon l'une quelconque des revendications 1 à 4, comprenant également un ou plusieurs agents de coalescence du type traditionnel.

6. Composition selon l'une quelconque des revendications 1 à 5, dans laquelle l'eau est présente dans une quantité égale au complément à 100% en poids par rapport à la somme des pourcentages en poids des autres composants (résines, co-solvants, pigments, charges, additifs).

7. Composition selon l'une quelconque des revendications 1 à 6, dans laquelle l'agent de coalescence a un point d'ébullition à la pression atmosphérique dans la plage de 150°C à 300°C, de préférence encore de 170°C à 250°C.

8. Composition selon l'une quelconque des revendications 1 à 7, dans laquelle la résine est une résine sélectionnée parmi : résines acryliques, acryliques autoréticulantes, acryliques-styrènes, acryliques-styrènes autoréticulantes, vinyliques, acryliques-vinyliques, polyoléfine, résines de polyoléfine modifiée, copolymères d'acétal, élastomères de polyuréthane (PUD), élastomères de polyuréthane (PUD) modifiés (par exemple avec des acides gras, avec des résines époxy, etc.), élastomères de polyuréthane (PUD) autoréticulants, copolymères acryliques-élastomères, résines époxy, résines de silicone, résines phénoxy, résines de polyester, résines alkydes modifiées à l'huile, systèmes époxy-mélamine, systèmes époxy-uréiques, systèmes époxy-isocyaniques bloqués, systèmes acryliques-mélanine, systèmes acryliques-uréiques, systèmes acryliques-isocyaniques bloqués, systèmes polyesters-mélamine, systèmes polyesters-uréiques, systèmes polyesters-isocyaniques bloqués, systèmes de cellulose estérifiée; les systèmes bi-composants suivants : à base acrylique-isocyanique, à base polyester-isocyanique, à base époxy-isocyanique, à base de produit d'addition époxy-amine à base époxy-amine, à base de produit d'addition époxy-amide, à base époxy-amide-amine, à base époxy-amine-imidazoline, à base époxy-amide, à base de copolymère acrylique/acrylique-élastomère-silane, à base de copolymère acrylique/acrylique-élastomère-carboimide, à base de copolymère acrylique/acrylique-élastomère-aziridine, à base acrylique-oxyde de zinc; oligomères acrylés (uréthane, polyesters, polyéthers, acrylique, époxy, PUD) ; résines acryliques et acryliques modifiées, vinyliques et vinyliques modifiées, résines de polyoléfine et de polyoléfine modifiée, élastomères de polyurhétane (PUD) et élastomères de polyuréthane (PUD) modifiés, résines époxy, résines phénoxy, résines de polyester, résines alkydes modifiées à l'huile ; les systèmes bi-composants suivants : à base acrylique-isocyanique, à base polyester-isocyanique, à base époxy-isocyanique, systèmes basés sur une résine époxy réticulée avec des durcisseurs contenant des groupes amine ou amide fonctionnels, à base de copolymère acrylique/acrylique-élastomère réticulé avec des silanes, imides, aziridines, oxydes de zinc ; des oligomères acrylés (uréthane, polyesters, acrylique, époxy, PUD) sont utilisés de préférence.

9. Composition selon l'une quelconque des revendications 1 à 8, dans laquelle la résine est sous la forme d'une dispersion aqueuse ou émulsion aqueuse ou émulsion aqueuse colloïdale.

10. Composition selon l'une quelconque des revendications 1 à 9, comprenant également un ou plusieurs pigments sélectionnés parmi :
- pigments inorganiques tels que : dioxyde de titane, oxydes de fer, vanadates de bismuth, aluminosilicates, sulfure de molybdène, titanates ; aluminiums et aluminiums revêtus, laitons, bronzes, (divers types de pigments en flocons à base de métal ou d'alliage métallique avec un ordre d'oxydation nul), micas naturels revêtus avec des oxydes métalliques (tels que, par exemple, dioxyde de titane, oxydes de fer, oxydes de chrome, etc.), en plus de ceux qui sont appelés "pigments de micas synthétiques" revêtus (tels que par exemple, des pigments à base d'alumine, silice, aluminium, cristaux liquides, etc., revêtus ou non avec des oxydes métalliques), phosphates, ortho-phosphates, hydrates phosphatés de zinc, aluminium, molybdène, calcium, phosphosilicates, hydrates de phosphosilicate de zinc, calcium, strontium, aluminium, phosphoborates de zinc, phosphosilicates de baryum, borosilicates de calcium ; pigments à base de calcium-silice ;
- pigments organométalliques tels que phtalocyanines, laques métalliques (manganèse, etc.), complexes métalliques (composés azoïques) ;
- pigments organiques tels que les composés suivants : azoïque (mono-azoïque, mono-azoïque-arylide, mono-azoïque-benzimidazolone, mono-azoïque-naphtol, diazoïque-pyrazolone, condensations azoïques), isoindoline (tétrachlorure), quinophtalone, quinacridone, anthraquinone, pyrazolquinazolone, périnonique, périlénique, indanthrone, diketopyrrolpyrrolique, carbazole-dioxazine ;
- noir de carbone.

11. Composition selon l'une quelconque des revendications 1 à 10, comprenant également une ou plusieurs charges sélectionnées parmi les composés suivants : silicones, sulfates de baryum, carbonates de calcium, silicates d'aluminium, de magnésium, calcium, sulfures.

12. Composition selon l'une quelconque des revendications 1 à 11, comprenant également un ou plusieurs additifs sélectionnés parmi les composés de salification, catalyseurs, agents tensioactifs, stabilisateurs, agents d'adhérence, agents anticorrosion, biocides, régulateurs de viscosité, filtres et agents de protection contre la lumière, initiateurs, photo-initiateurs, activateurs et photo-activateurs.

13. Utilisation du composé ayant la formule générale (I)
R₁(OR₂)ₙOCOO(R₃O)ₘR₄ (I)
où
R₁ et R₄, indépendamment l'un de l'autre, sont un groupe alkyle linéaire ou ramifié, ayant 1 à 6 atomes de carbone, de préférence 1 à 4 ;
R₂ est un groupe alkylène linéaire ou ramifié, ayant 2 à 6 atomes de carbone, de préférence 2 à4;
R₃ est un groupe alkylène linéaire ou ramifié, ayant 2 à 6 atomes de carbone, de préférence 2 à3;
n est un nombre entier variant de 1 à 4, de préférence de 1 à 2 ;
m est un nombre entier variant de 0 à 4, de préférence de 0 à 2 ;
comme agent de coalescence dans des compositions de revêtement.

14. Utilisation selon la revendication 13, dans laquelle le composé ayant la formule générale (I) est sélectionné parmi 2(2-méthoxyéthoxy)-carbonate de méthyle éthyle (A), carbonate d'éthyle 2-méthoxyéthyle (B), carbonate de méthyle 3-méthoxybutyle, carbonate d'éthyle 3-méthoxybutyle (C), carbonate de méthyle 2-méthoxyéthyle, carbonate de méthyle 1-méthyle-2-propoxyéthyle, carbonate de méthyle 2-butoxyéthyle, carbonate de méthyle 2-méthoxypropyle, carbonate bis(2-méthoxyéthyle), carbonate de méthyle 2-propoxyéthyle, carbonate de méthyle 2-isopropoxyéthyle ; de préférence parmi 2(2-méthoxyéthoxy)-carbonate de méthyle éthyle (A), carbonate d'éthyle 2-méthoxyéthyle (B) et carbonate de méthyle 3-méthoxybutyle (C).

15. Procédé pour la préparation d'une composition de revêtement à base aqueuse comprenant le mélange et/ou la dispersion de:
a) une ou plusieurs résines ;
b) un ou plusieurs agents de coalescence constitués par des composés ayant la formule générale (I)
R₁(OR₂)ₙOCOO(R₃0)ₘR₄ (I)
où
R₁ et R₄, indépendamment l'un de l'autre, sont un groupe alkyle linéaire ou ramifié, ayant 1 à 6 atomes de carbone, de préférence 1 à 4 ;
R₂ est un groupe alkylène linéaire ou ramifié, ayant 2 à 6 atomes de carbone, de préférence 2 à4;
R₃ est un groupe alkylène linéaire ou ramifié, ayant 2 à 6 atomes de carbone, de préférence 2 à3;
n est un nombre entier variant de 1 à 4, de préférence de 1 à 2 ;
m est un nombre entier variant de 0 à 4, de préférence de 0 à 2 ;
(c) de l'eau ;
(d) en option, des pigments et/ou des charges et/ou des additifs ;
et la filtration successive du mélange ou de la dispersion obtenue.

16. Procédé pour la préparation d'une composition de revêtement selon la revendication 15, dans lequel l'agent de coalescence est un composé selon l'une quelconque des revendications 13 ou 14.

17. Procédé selon la revendication 15 ou 16, comprenant également une phase de raffinage de la dispersion avant la filtration.

18. Procédé pour le revêtement d'un substrat comprenant les étapes opérationnelles suivantes:
i) préparation d'une composition de revêtement à base aqueuse comprenant au moins un agent de coalescence ayant la formule générale (I)
R₁(OR₂)ₙOCOO(R₃O)ₘR₄ (I)
où
- R₁ et R₄, indépendamment l'un de l'autre, sont un groupe alkyle linéaire ou ramifié, ayant 1 à 6 atomes de carbone, de préférence 1 à 4 ;
- R₂ est un groupe alkylène linéaire ou ramifié, ayant 2 à 6 atomes de carbone, de préférence 2 à 4 ;
- R₃ est un groupe alkylène linéaire ou ramifié, ayant 2 à 6 atomes de carbone, de préférence 2 à 3 ;
- n est un nombre entier variant de 1 à 4, de préférence de 1 à 2 ;
- m est un nombre entier variant de 0 à 4, de préférence de 0 à 2 ;
ii) application de la composition de revêtement sur la surface d'un substrat ;
iii) séchage de la composition de revêtement appliquée sur le substrat.

19. Procédé pour le revêtement d'un substrat selon la revendication 18, dans lequel la composition de revêtement est une composition selon l'une quelconque des revendications 1 à 12.

20. Procédé selon la revendication 18 ou 19, dans lequel l'application est effectuée avec un des procédés suivants : brosse, rouleau, vaporisation avec des aérographes du type pneumatique, mélange d'air, sans air, vaporisation avec des aérographes électrostatiques du type pneumatique, mélange d'air, sans air, vaporisation avec des coupelles et disques rotatifs électrostatiques, immersion, revêtement par aspersion, voile, dépôt avec des rouleaux, électrophorèse.

21. Procédé selon l'une quelconque des revendications 18 à 20, dans lequel le séchage est effectué dans des conditions ambiantes et/ou à une haute température par convection et/ou par rayonnement électromagnétique du type infrarouge, microondes ou ultraviolet.

22. Procédé selon l'une quelconque des revendications 18 à 21, dans lequel le substrat est sélectionné parmi des matières plastiques thermoplastiques, thermodurcissables, élastomères de tous types, supports métalliques, tous types de matières ligneuses, supports minéraux, en plus des supports revêtus avec d'autres produits de revêtement.
